# EUROPÄISCHE PATENTANMELDUNG

(11) **EP 1 645 393 A1**
(43) Veröffentlichungstag der Anmeldung: **12.04.2006**
(21) Anmeldenummer: 05109276.5
(22) Anmeldetag: 06.10.2005
(51) Int. Cl.: B29C 45/16

(54) **Spritzgießmaschine mit nachrüstbarer Einspritzeinheit und Nachrüstmodul für eine solche Spritzgießmaschine**

(30) Priorität: 08.10.2004 DE 102004049361
(71) Anmelder: Demag Ergotech GmbH, 90571 Schwaig (DE)
(72) Erfinder: Seidel, Jörg, 90559 Burgthann (DE); Grötsch, Willi, 91249 Weigendorf (DE); Brada, Ralf, 99625 Kölleda (DE)
(74) Vertreter: Maierl, Christine

(57) **Zusammenfassung**

Die Erfindung betrifft eine Spritzgießmaschine mit einer ersten Plastifizier- und Einspritzeinheit (8) und einer zweiten Plastifizier- und Einspritzeinheit (14), wobei die zweite Plastifizier- und Einspritzeinheit (14) nachrüstbar ist, sowie ein Nachrüstmodul (12) mit einer Plastifizier- und Einspritzeinheit zum Nachrüsten derselben an einer Spritzgießmaschine mit mindestens einer ersten Plastifizier- und Einspritzeinheit (8).

Die Aufgabe eine Spritzgießmaschine mit einer nachgerüsteten zusätzlichen Plastifizier- und Einspritzeinheit (14) sowie ein Nachrüstmodul (12) zum Nachrüsten einer solchen an einer Spritzgießmaschine vorzustellen, wobei im wesentlichen keine Veränderung an der ursprünglichen Spritzgießmaschine notwendig ist, wird durch eine Spritzgießmaschine bzw. ein Nachrüstmodul gelöst, das Mittel aufweist, um die zweite solche Einheit (14) unabhängig von der ersten (8) an der Spritzgießmaschine (1) zu haltern, und Düsenmittel (22) zum Führen von Schmelze von den beiden Plastifizier- und Einspritzeinheiten (8, 14) durch eine einzige Düsenöffnung (4) der Formaufspannplatte (2), wobei beide Einheiten (8, 14) an diese Düsenmittel (4) andockbar sind.

## Beschreibung

Die vorliegende Erfindung betrifft eine Spritzgießmaschine mit einer ersten Plastifizier- und Einspritzeinheit und einer zweiten Plastifizier- und Einspritzeinheit, wobei die zweite Plastifizier- und Einspritzeinheit nachrüstbar ist, sowie ein Nachrüstmodul mit einer Plastifizier- und Einspritzeinheit zum Nachrüsten derselben an einer Spritzgießmaschine mit mindestens einer ersten Plastifizier- und Einspritzeinheit.

Zum Nachrüsten von standardmäßig ausgelieferten Einkomponentenspritzgießmaschinen werden bislang nur Nachrüstmodule mit zusätzlichen Plastifizier- und Einspritzeinheiten in den sogenannten L- und V-Versionen angeboten. Bei der L-Version ist das Nachrüstmodul in der Horizontalen senkrecht zur Hauptachse der Spritzgießmaschine anbringbar. Im allgemeinen wird ein zusätzlicher Maschinentisch mit einer darauf gelagerten Plastifizier- und Einspritzeinheit im rechten Winkel zu der bereits vorhandenen Spritzgießmaschine an derselben befestigt. Ein Nachrüsten gemäß der L-Version ist beispielsweise aus dem Gebrauchsmuster DE 200 10 545 U1 bekannt. Hier wird im Bereich des Formwerkzeugs ein Rahmen an den Holmen einer Spritzgießmaschine angebracht, an dessen vertikalen Rahmenteilen Druckmittelzylinder zur Aufbringung der Düsenanlagekraft zwischen der Plastifizier- und Einspritzeinheit und der Formvorrichtung anklemmbar sind.

In der V-Version ist das Nachrüstmodul vertikal über der Spritzgießmaschine ebenfalls im rechten Winkel zu einer Hauptachse derselben montierbar. Hierbei wird beispielsweise auf einer Formaufspannplatte der Spritzgießmaschine eine Basisplatte montiert, auf der ein Rahmen verschieblich angeordnet ist, der eine Querträgerstruktur trägt, entlang derer eine zweite Einspritzeinheit im wesentlichen senkrecht zur Bewegungsrichtung des Rahmens verschieblich angebracht ist. Eine solche Nachrüsteinheit ist aus der US 6,352,427 B1 bekannt. Das Einspritzen der zweiten Komponente wird hier bevorzugt direkt in eine Formvorrichtung der Spritzgießmaschine, ggf. direkt in die Trennebene der Formvorrichtung vorgenommen.

Nachteilig an diesen Vorrichtungen ist der relativ große Platzbedarf. Bei einer L-Version wird zusätzlicher Stellraum auf dem Hallenboden neben der ursprünglichen Spritzgießmaschine benötigt, wodurch eine geringere Gesamtanzahl an Spritzgießmaschinen in einem begrenzten Hallenraum unterbringbar ist. Im Falle des Nachrüstens gemäß der V-Version ergibt sich häufig ebenfalls ein Platzproblem, da eine relativ große Hallenhöhe benötigt wird, damit die zusätzliche Einspritzeinheit oberhalb der Spritzgießmaschine derart montiert werden kann, dass sie ausreichend Bewegungsspielraum zum Wegfahren von der Formvorrichtung hat, um ein Entformen der gespritzten Formteilen zu ermöglichen. Häufig sind die Maschinenhallen von Herstellern jedoch nicht ausreichend hoch gebaut, so dass ein Nachrüsten in der V-Version nur für sehr kleine Nachrüsteinheiten oder gar nicht in Frage kommt.

Bei Mehrkomponenten-Spritzgießmaschinen ist es auch bekannt, zusätzliche Plastifizier- und Einspritzeinheiten in der sogenannten Rucksack- oder R-Version anzubieten, die auch als Huckepackstellung bekannt ist. Hierunter versteht man ein Anbringen der zusätzlichen Plastifizier- und Einspritzeinheit auf derselben Seite einer Formaufspannplatte, im allgemeinen der festen Formaufspannplatte, wie die erste bzw. Haupteinspritzeinheit, die im wesentlichen entlang einer Hauptachse der Spritzgießmaschine ausgerichtet ist. Zumeist werden diese zusätzlichen Einheiten oberhalb der ersten Einspritzeinheit unter einem Winkel zu derselben angebracht und sind mit einem speziellen Aufbau auf der unteren Einheit montiert. Diese zusätzlichen Plastifizier- und Einspritzeinheiten haben sich bislang als nicht nachrüstbar erwiesen, da sie eben einerseits an der unteren Plastifizier- und Einspritzeinheit befestigt werden, und zweitens die Formaufspannplatte für das Durchführen einer weiteren Kunststoffkomponente ausgelegt sein muss. Es muss also beispielsweise eine zweite Düsenöffnung vorgesehen sein, durch die eine Düse der zweiten Einspritzeinheit an die Formvorrichtung andocken kann, oder aber zumindest eine vergrößerte einzige Düsenöffnung. Eine Spritzgießmaschine muss bei Verwenden eines zweiten Plastifizier- und Einspritzaggregats in der R-Stellung also von vornherein auf die Aufnahme eines solchen, beispielsweise durch eine zusätzlichen Düsenöffnung in der Formaufspannplatte angepasst sein. Ein nachträgliches Vorsehen einer solchen Einheit ist nur unter extremen Umbaumaßnahmen, wie Austausch der Formaufspannplatte, möglich.

Aufgabe der vorliegenden Erfindung ist es, eine Spritzgießmaschine mit einer nachgerüsteten zusätzlichen Plastifizier- und Einspritzeinheit sowie ein Nachrüstmodul zum Nachrüsten einer solchen an einer Spritzgießmaschine vorzustellen, wobei im wesentlichen keine Veränderung an der ursprünglichen Spritzgießmaschine notwendig ist. Die nachgerüstete Plastifizier- und Einspritzeinheit soll flexibel einsetzbar und eine Unabhängigkeit zwischen den beiden Plastifizier- und Einspritzeinheiten gewährleistet sein, so dass beide gut und separat wartbar sind, und nur einen geringen Platzbedarf haben.

Diese Aufgabe wird durch eine Spritzgießmaschine mit den Merkmalen des Anspruchs 1 bzw. ein Nachrüstmodul mit den Merkmalen des Anspruchs 8 erfüllt.

Die erfindungsgemäße Spritzgießmaschine zeichnet sich dadurch aus, dass Mittel vorgesehen sind, um die zweite Plastifizier- und Einspritzeinheit unabhängig von der ersten an der Spritzgießmaschine zu haltern, wobei die zweite Einspritzeinheit an den Mitteln zum Haltern relativ zu einer Formaufspannplatte der Spritzgießmaschine fest oder verfahrbar gelagert ist, und dass Düsenmittel vorgesehen sind, um die Schmelze der beiden Plastifizier- und Einspritzeinheiten durch eine einzige Düsenöffnung der Formaufspannplatte zu führen. Durch diese konstruktive Ausgestaltung kann auf eine zusätzliche Düsenöffnung an der Formaufspannplatte, was ein Umrüsten derselben bedingen würde, verzichtet werden. Da die Düsenmittel derart ausgebildet sind, dass beide Plastifizier- und Einspritzeinheiten an sie andockbar sind, sind diese unabhängig voneinander betätigbar. Vorteilhaft an dieser Ausgestaltung ist eine geringe Aufstellfläche, da beide Einspritzeinheiten von einer Seite der Formaufspannplatte der Spritzgießmaschine über gemeinsame Düsenmittel mit einer Formvorrichtung der Spritzgießmaschine kommunizieren. Dadurch, dass beide Plastifizier- und Einspritzeinheiten auf derselben, im wesentlichen der Formvorrichtung abgewandten Seite der Formaufspannplatte angeordnet sind, ist weiterhin eine gute Zugänglichkeit zur Formvorrichtung gegeben, es besteht also beispielsweise die Möglichkeit, Roboter zum Einlegen von Einlegeteilen oder Entnehmen von fertigen Teilen dort vorzusehen. Der Höhenbedarf einer solchen Spritzgießmaschine kann durch die Anordnung der beiden Plastifizier- und Einspritzeinheiten auf derselben Seite einer Formaufspannplatte, bei der es sich bevorzugt um die feste Formaufspannplatte handelt, weiter reduziert werden. So ist insbesondere eine starke Höhenausdehnung der Spritzgießmaschine vermeidbar. Ein zusätzliches Maschinenbett, wie es von der L-Version der Nachrüsteinheiten bekannt ist und das seitlich der Maschine einen großen Platzbedarf hat, ist nicht notwendig. Die Plastifizier- und Einspritzeinheiten sind bevorzugt nach dem sogenannten Schneckenkolbenprinzip arbeitende Plastifizier- und Einspritzeinheiten, bei denen eine Schnecke sowohl zum Plastifizieren als auch zum Einspritzen zum Einsatz kommt.

Anders als bei der V-Version kann die zweite Plastifizier- und Einspritzeinheit erfindungsgemäß derart angeordnet sein, dass sie im wesentlichen einen Winkel, der kleiner als 90°, insbesondere aber kleiner als 45° sein sollte, mit der ersten Plastifizier- und Einspritzeinheit einschließt, wodurch eine geringe Höhen- bzw. Seitenausdehnung und somit eine leichte Nachrüstbarkeit auch bei wenig Platz gegeben ist.

Für die Düsenmittel sind verschiedene Ausgestaltungsformen denkbar. Einerseits kann ein sogenannter Trennkopf, wie er zum Erzeugen einer Haut- und einer Kernkomponente in einem Formwerkzeug einer Spritzgießmaschine bekannt ist, vorgesehen sein. Solche Trennköpfe gibt es in verschiedenen konstruktiven Ausgestaltungen. Die Schmelze von beiden Plastifizier- und Einspritzeinheiten ist hierbei durch eine einzige Austrittsöffnung in ein Formwerkzeug führbar. Eine oder beide Schmelzezuführungen von den beiden Plastifizier- und Einspritzeinheiten zu der Austrittsöffnung oder diese selbst können verschließbar sein, beispielsweise nach Art einer Nadelverschlussdüse. Trennköpfe werden eingesetzt, um Spritzgussteile mit einer Hautkomponente und einer Kernkomponente herzustellen, wobei für die Hautkomponente im allgemeinen ein höherwertiges Material verwendet wird als für die Kernkomponente, bei der oft Recyclat zum Einsatz kommt. Erfindungsgemäß ist der Trennkopf derart ausgestaltet, dass beide Plastifizier- und Einspritzeinheiten unabhängig voneinander an den Trennkopf andockbar sind, beispielsweise durch einfaches Befestigen einer vorderen Öffnung der Plastifizier- und Einspritzeinheit oder aber auch durch Anlegen unter Druck an eine entsprechende Andockstation des Trennkopfes, die beispielsweise die Form einer Kalotte haben kann, wobei eine Strömungsverbindung zwischen der Plastifizier- und Einspritzeinheit und einer Schmelzezuführung in dem Trennkopf sichergestellt ist. Durch die Verwendung eines Trennkopfes als Düsenmittel kann beispielsweise eine Standard-Einkomponenten-Spritzgießmaschine einfach und problemlos zu einer Zweikomponenten-Spritzgießmaschine aufgerüstet werden, mit der sich vorteilhaft und günstig Spritzgussteile mit Haut- und Kernkomponenten produzieren lassen. Düsenmittel zum Einspritzen von Sandwichstrukturen, wie das Herstellen einer Haut- und einer Kernkomponente auch genannt wird, sind beispielsweise auch aus der JP 2004074539 A, JP 2004130554 A und JP 2003053783 A bekannt, eine weitere Art einer Düse zum Einspritzen zweier Komponenten durch einen einzigen Auslasskanal ist aus der US 5,522,720 bekannt.

Als Düsenmittel können auch sogenannte Doppeldüsen vorgesehen sein, mittels derer jeweils eine separate Strömungsverbindung zwischen der jeweiligen Plastifizier- und Einspritzeinheit und einer Formvorrichtung der Spritzgießmaschine herstellbar ist, beispielsweise durch Vorsehen von jeweils zugehörigen vorderen Düsenköpfen, die durch eine einzige Düsenöffnung direkt an einen Schmelzekanal in einem Formwerkzeug andockbar sind. Mittels einer solchen Doppeldüse, deren beide Schmelzekanäle separat voneinander verschließbar sein können, ist es möglich, entweder zwei verschiedene, in der Formvorrichtung vorgesehene Formkavitäten über eine einzige Düsenöffnung der Formaufspannplatte mit unterschiedlichen Schmelzekomponenten zu versorgen, wobei die beiden Kavitäten auch durch ansteuerbare Trennschieber nur zeitweise getrennt sein können, oder aber eine Kavität mit zwei verschiedenen separaten Kunststoffkomponenten zu versorgen. Die genauere Ausgestaltung einer derartigen Doppeldüse kann unterschiedlich sein, es kann auch nur ein einziger Düsenkopf mit zwei Schmelzekanalöffnungen vorgesehen sein, der in eine entsprechende Andockstelle an dem Formwerkzeug einfahrbar ist und dort mit jeweiligen weiterleitenden Schmelzenkanälen koppelbar ist. Vorteilhafter Weise können Zentrier- bzw. Ausrichtmittel, wie per se bekannt, vorgesehen sein. Auch ist es möglich, zwei kleinformatige separate Düsenköpfe vorzusehen, deren Ausdehnung jedoch so ist, dass sie gemeinsam durch die einzige vorgegebene Düsenöffnung der Formaufspannplatte passen, wobei jeder Düsenkopf an einen separaten, in einem Formwerkzeug vorgesehenen Schmelzekanal andockt. Eine dergestalte Doppeldüse ist beispielsweise aus der AT 394 968 B bekannt.

Die Düsenmittel können jeweils derart ausgeführt sein, dass beide Plastifizier- und Einspritzeinheiten einfach an sie andockbar sind. Beispielsweise können sie schwimmend zwischen den Plastifizier- und Einspritzeinheiten und der Formvorrichtung gelagert oder an der Formvorrichtung befestigt sein, während die Plastifizier- und Einspritzeinheiten an sie heranfahrbar und andockbar sind. Die Düsenmittel können auch an einer der Plastifizier- und Einspritzeinheiten befestigt sein, während die zweite an sie lediglich durch die Düsenanpresskraft andockt und die Düsenmittel ebenfalls durch die von den Einspritzeinheiten aufbringbare Düsenanpresskraft an ein Formwerkzeug andockbar sind. Auch eine feste Verbindung zwischen mindestens einer der Plastifizier- und Einspritzeinheiten, den Düsenmitteln und einer Formvorrichtung ist denkbar. Ebenso können die Düsenmittel mit beiden Plastifizier- und Einspritzeinheiten verbunden sein.

Die Mittel zum Haltern der zweiten Plastifizier- und Einspritzeinheit können bevorzugt einen Träger mit integrierter Linearführung umfassen. Ein solcher Träger kann beispielsweise im wesentlichen im rechten Winkel zu einer Formaufspannplatte angeordnet sein, wobei die zweite Plastifizier- und Einspritzeinheit entlang der Linearführung verfahrbar lagerbar ist. Es kann beispielsweise aber auch von Vorteil sein, den Träger im wesentlichen parallel zu einer Einspritzrichtung der zweiten Plastifizier- und Einspritzeinheit vorzusehen, wodurch eine günstige Kraftbilanz beim Aufbringen der Anpresskraft der Einspritzeinheit an die Düsenmittel erzielbar ist.

Besonders vorteilhaft kann der Träger an einer Formaufspannplatte der Spritzgießmaschine befestigbar sein. Insbesondere im Falle von relativ kleinformatigen zweiten Plastifizier- und Einspritzeinheiten kann es ausreichend sein, den Träger nur an der Formaufspannplatte zu befestigen, und zwar bevorzugt in dort bereits vorgesehenen Bohrungen.

Der Träger kann auch auf einem Maschinenbett der Spritzgießmaschine abstützbar sein, hierbei ist es beispielsweise möglich, den Träger lediglich über Abstützstreben auf dem Maschinenbett abzustützen, oder aber ihn zusätzlich zu einer möglichen Befestigung an einer Formaufspannplatte an dem Maschinenbett abstützbar auszuführen. Vorteilhaft hieran ist die bessere Gewichtsaufnahme des Gewichts der zweiten Plastifizier- und Einspritzeinheit durch Träger und Abstützvorrichtung. Der Träger und die Abstützvorrichtung sind derart vorzusehen, dass die erste Plastifizier- und Einspritzeinheit durch sie nicht beeinträchtigt ist.

Während es durchaus denkbar ist, die zweite Einspritzeinheit an den Mitteln zum Haltern auch im wesentlichen seitlich zu einer ersten Plastifizier- und Einspritzeinheit einer Spritzgießmaschine zu lagern, so hat es sich doch als besonders vorteilhaft erwiesen, wenn die zweite Plastifizier- und Einspritzeinheit im wesentlichen oberhalb der ersten solchen Einheit, d. h. nach dem klassischen Huckepack-Prinzip, anbringbar ist. Gerade hierbei ergibt sich eine besonders günstige Platzausnutzung durch die derart nachgerüstete Spritzgießmaschine, da die zweite Plastifizier- und Einspritzeinheit im wesentlichen dieselbe Bodenfläche überdeckt wie bereits die erste Plastifizier- und Einspritzeinheit.

Vorteilhaft hieran ist weiterhin, dass die Düsenmittel durch diese Anordnung der Plastifizier- und Einspritzeinheiten, unabhängig von der tatsächlichen Verbindung zwischen ihnen und den beiden Plastifizier- und Einspritzeinheiten, im wesentlichen biegefrei lagerbar sind, da die Aufbringung der Anpresskraft von beiden Einheiten im wesentlichen parallel und senkrecht zu der Formaufspannplatte sowie einem an dieser gelagerten Formwerkzeug erfolgt. Eine zusätzliche Kraftaufnahme für auf die Düsenmittel wirkende Querkräfte, die im wesentlichen parallel zur Formaufspannplatte wirken, kann deshalb überflüssig sein.

Durch die im wesentlichen parallele Krafteinleitung in die Düsenmittel ist zudem die Dichtwirkung zwischen den Düsenmitteln und der Formvorrichtung verbesserbar. Ein durch die Düsenanpresskraft hervorgerufenes Einarbeiten der Düsenmittel in die Formvorrichtung durch Verschleiß, also eine effektive Veränderung des Auftreffpunktes zwischen Düsenmitteln und Formvorrichtung, erfordert bei dieser Anordnung im wesentlichen keine Nachjustierung, da die Ortsänderung durch die im wesentlichen in Einspritzrichtung wirkende Anpresskraft kompensierbar ist. Bei auf die Düsenmittel wirkenden Querkraftkomponenten hingegen ist eine Nachjustierung nach einer gewissen Betriebsdauer unerlässlich, um weiterhin eine Strömungsverbindung zwischen Düsenmitteln und Formvorrichtung bzw. einem oder mehreren in dieser vorgesehenen Schmelzekanälen zu gewährleisten.

Aufgrund des im wesentlichen parallelen Andockens der beiden Plastifizier- und Einspritzeinheiten an die Düsenmittel kann auch eine Verfahrbarkeit der Düsenmittel ermöglicht werden, ohne dass eine oder beide Plastifizier- und Einspritzeinheiten von den Düsenmitteln abgehoben werden müssten, wodurch beispielsweise auch die Zykluszeit reduzierbar ist.

Im Betrieb kann die zweite Plastifizier- und Einspritzeinheit separat von der ersten Plastifizier- und Einspritzeinheit verfahrbar sein. Es können also für jede der Plastifizier- und Einspritzeinheiten separate Mittel zum Verfahren derselben vorgesehen sein. Es ist aber auch möglich, beide Plastifizier- und Einspritzeinheiten derart zu verbinden, dass sie gemeinsam verfahrbar sind. In diesem Fall kann beispielsweise die zweite, gegebenenfalls nachgerüstete Plastifizier- und Einspritzeinheit von der ersten Plastifizier- und Einspritzeinheit mitgeschleppt werden, so dass Mittel zum Verfahren der Plastifizier- und Einspritzeinheit nur einmal vorzusehen sind, wodurch die erfindungsgemäße Spritzgießmaschine noch kompakter und günstiger in der Herstellung ist.

Gemäß einer vorteilhaften Ausgestaltung der vorliegenden Erfindung können die Düsenmittel zumindest teilweise in einer Ausnehmung der Formaufspannplatte im Bereich der Düsenöffnung aufgenommen sein, wodurch der Platzbedarf der Spritzgießmaschine und insbesondere deren Längenausdehnung weiter reduzierbar ist. Dies wird insbesondere auch aufgrund der im wesentlichen parallelen Krafteinleitung von den beiden Plastifizier- und Einspritzeinheiten in die Düsenmittel ermöglicht.

Erfindungsgemäß kann also eine äußerst kompakte Spritzgießmaschine vorgestellt werden, die zum Zweikomponenten-Spritzguss nachgerüstet wurde und die nur einen geringen Platzbedarf hat.

Die Erfindung bezieht sich auch auf ein Nachrüstmodul, das eine Plastifizier- und Einspritzeinheit umfasst, und mittels dessen diese Plastifizier- und Einspritzeinheit an einer Spritzgießmaschine mit mindestens einer ersten Plastifizier- und Einspritzeinheit nachrüstbar ist. Das Nachrüstmodul weist Mittel zum Haltern der Plastifizier- und Einspritzeinheit auf, die derart ausgestaltet sind, dass diese unabhängig von der ersten Plastifizier- und Einspritzeinheit an der Spritzgießmaschine halterbar sind, wodurch eine Unabhängigkeit der beiden Plastifizier- und Einspritzeinheiten voneinander gewährleistbar ist. Die zweite Plastifizier- und Einspritzeinheit ist an den Mitteln zum Haltern relativ zu einer Formaufspannplatte der Spritzgießmaschine verfahrbar gelagert, so dass sie an Düsenmittel andockbar und von diesen wegfahrbar ist, was beispielsweise bei Einrichtarbeiten, oder auch bei Komponentenwechseln und Reinigungsarbeiten von Vorteil ist.

Vorteilhafter Weise ist die Plastifizier- und Einspritzeinheit des Nachrüstmoduls derart an dessen Mitteln zum Haltern angebracht, dass die Längsachsen der Plastifizier- und Einspritzeinheit des Nachrüstmoduls und der ersten Plastifizier- und Einspritzeinheit im montierten Zustand einen Winkel einschließen, der kleiner als 90° und insbesondere kleiner als 45° ist. Hierdurch lässt sich der Platzbedarf des Nachrüstmoduls an der Spritzgießmaschine weiter reduzieren.

Das Nachrüstmodul weist Düsenmittel zum Führen von Schmelze von beiden Plastifizier- und Einspritzeinheiten auf, die derart gestaltet sind, dass die Schmelze durch eine einzige Düsenöffnung einer Formaufspannplatte führbar ist, und wobei diese Düsenmittel derart ausgestaltet sind, dass sowohl die Plastifizier- und Einspritzeinheit des Nachrüstmoduls als auch diejenige der Spritzgießmaschine an sie andockbar sind. Hierunter kann verstanden werden, dass die Düsenmittel beispielsweise schwimmend zwischen den Plastifizier- und Einspritzeinheiten und einer an der Formaufspannplatte vorgesehenen Formvorrichtung lagerbar sind, oder aber dass entweder die erste Plastifizier- und Einspritzeinheit und/oder die Plastifizier- und Einspritzeinheit des Nachrüstmoduls mit den Düsenmitteln fest oder durch Aufbringen einer Düsenanpresskraft auf die Plastifizier- und Einspritzeinheit verbindbar sind, derart dass eine Strömungsverbindung gewährleistbar ist.

Vorteilhaft an diesem Nachrüstmodul ist, dass unabhängig von einem ersten Plastifizier- und Einspritzmodul einer Spritzgießmaschine, bei der es sich entweder um eine Einkomponenten-Spritzgießmaschine oder aber bereits um eine Mehrkomponenten-Maschine handeln kann, ohne großen Aufwand eine zusätzliche Plastifizier- und Einspritzeinheit derart nachrüstbar ist, dass eine Montierbarkeit unabhängig von der ersten Plastifizier- und Einspritzeinheit an der Spritzgießmaschine gegeben ist. Durch die Verwendung der Düsenmittel, über die beide Plastifizier- und Einspritzeinheiten an eine Formvorrichtung andockbar sind, ist gegeben, dass beide Plastifizier- und Einspritzeinheiten im wesentlichen auf einer Seite einer Formaufspannplatte vorsehbar sind. Dies gewährleistet eine geringe Aufstellfläche einer Maschine mit Nachrüstmodul sowie eine gute Zugänglichkeit zu derselben, wobei ein relativ geringer Höhenbedarf der Vorrichtung gegeben ist.

Bevorzugt können die Mittel zum Haltern der Plastifizier- und Einspritzeinheit des Nachrüstmoduls einen Träger mit einer integrierten Linearführung umfassen, der derart ausgestaltet ist, dass er an einer Spritzgießmaschine montierbar ist. Die Plastifizier- und Einspritzeinheit kann entlang der Linearführung verfahrbar gelagert sein, so dass sie an die Düsenmittel oder aber mit diesen an die Formvorrichtung andockbar ist, sowie bei Umrüstarbeiten durch Verfahren in eine günstige Stellung bringbar ist. Auch die Anpresskraft kann über die Mittel zum Verfahren aufbringbar sein.

Vorteilhafter Weise kann der Träger derart ausgebildet sein, dass er an einer Formaufspannplatte, bevorzugt der festen Formaufspannplatte, einer Spritzgießmaschine befestigbar ausgebildet ist. Als Gegenstücke für die Aufnahme von evtl. Befestigungsmitteln wie Bolzen, Schrauben o. ä., eignen sich an einer Formaufspannplatte standardmäßig vorgesehene Bohrungen. Hierdurch ist eine einfache Nachrüstbarkeit ohne starke Modifikationen an der Spritzgießmaschine selbst gegeben.

Der Träger kann auch derart ausgestaltet sein, dass er an einem Maschinenbett einer Spritzgießmaschine abstützbar ist. Hier ist es beispielsweise möglich, ihn lediglich an einem Maschinenbett abstützbar auszubilden, oder aber auch an einer Formaufspannplatte befestigbar und zusätzlich an einem Maschinenbett abstützbar. Dies hat den Vorteil, dass eine bessere Gewichtsaufnahme der zusätzlichen Plastifizier- und Einspritzeinheit des Nachrüstmoduls gegeben ist. Bei einer solchen Ausgestaltung kann das Nachrüstmodul besonders einfach an eine existierende Spritzgießmaschine angepasst und an dieser befestigt werden.

Die Düsenmittel des Nachrüstmoduls können vorteilhafter Weise derart ausgestaltet sein, dass mittels ihrer die Schmelze der beiden Einheiten entweder durch einen zusammengeführten Schmelzekanal oder zwei getrennte Schmelzekanäle durch eine Düsenöffnung einer Formaufspannplatte der Spritzgießmaschine führbar ist. Es ist also möglich, die Düsenmittel derart zu gestalten, dass sie an zwei verschiedene Schmelzekanäle in einem Formwerkzeug andockbar sind, oder aber nur an einem einzigen solchen. In jedem Fall ist durch das Vorsehen dieser Düsenmittel gewährleistet, dass die Schmelze der beiden Plastifizier- und Einspritzeinheiten durch eine einzige Düsenöffnung einer Spritzgießmaschine, wie sie standardmäßig im Einkomponenten-Spritzgießen eingesetzt wird, führbar ist. Es können also beispielsweise sogenannte Trennköpfe zum Einsatz beim Sandwich-Spritzgießen verwendet werden, oder aber Doppeldüsen, die zwei unterschiedliche Austrittsöffnungen für die Schmelze aus den Düsenmitteln bereitstellen.

Besonders bevorzugt kann das Nachrüstmodul derart ausgestaltet sein, dass die Mittel zum Haltern der Plastifizier- und Einspritzeinheit derart an die Spritzgießmaschine anpassbar ausgestaltet sind, dass die Plastifizier- und Einspritzeinheit im wesentlichen oberhalb der ersten Plastifizier- und Einspritzeinheit halterbar ist. Dies stellt besonders wenig Ansprüche an Platz, und gewährleistet eine kompakt bauende nachgerüstete Spritzgießmaschine.

Anhand der beiliegenden Figuren sollen mögliche Ausgestaltungsformen der vorliegenden Erfindung noch näher erläutert werden. Es zeigen:
- **Fig. 1:**: einen Teil einer Spritzgießmaschine mit einer erfindungsgemäß nachgerüsteten zweiten Plastifizier- und Einspritzeinheit in schematischer Form,
- **Fig. 2:**: eine erste Ausgestaltungsmöglichkeit der Düsenmittel und
- **Fig. 3:**: eine zweite Ausgestaltungsmöglichkeit der Düsenmittel.

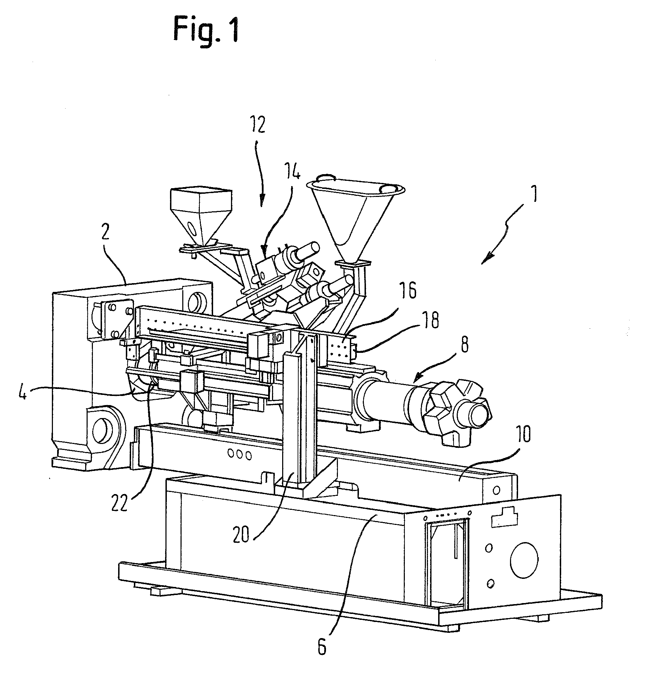

In Fig. 1 ist ein einspritzseitiger Abschnitt einer Spritzgießmaschine 1 gezeigt. Auf einem Maschinenbett 6 ist über eine Linearführung 10 eine erste Plastifizier- und Einspritzeinheit der Spritzgießmaschine 1, wie sie bei der standardmäßigen Auslieferung vorgesehen ist, gegenüber einer festen Formaufspannplatte 2 verschieblich gelagert.

Durch eine standardmäßig vorgesehene Düsenöffnung 4 in der Formaufspannplatte 2 kann die erste Plastifizier- und Einspritzeinheit 8 über eine Düse plastifiziertes Material in eine nicht näher dargestellte Formvorrichtung der Spritzgießmaschine 1 einspritzen. Ein Nachrüstmodul 12 ist unabhängig von der ersten Plastifizier- und Einspritzeinheit 8 an der Spritzgießmaschine 1 angebracht. Das Nachrüstmodul 12 umfasst einen Träger 16, der an der festen Werkzeugaufspannplatte 2 befestigt ist, und der über einen Abstützbalken 20 am Maschinenbett abgestützt ist. Der Träger weist eine integrierte Linearführung 18 auf, über die eine zweite Plastifizier- und Einspritzeinheit 14 an dem Träger gehaltert ist, und relativ zu der festen Werkzeugaufspannplatte 2 verfahrbar ist. Düsenmittel 22, über die durch die Düsenöffnung 4 eine Verbindung zwischen der ersten Plastifizier- und Einspritzeinheit 8 und der zweiten Plastifizier- und Einspritzeinheit 14 mit einer Formvorrichtung herstellbar ist, sind an der ersten Plastifizier- und Einspritzeinheit 8 befestigt, während die zweite Plastifizier- und Einspritzeinheit 14 an sie verschieblich andockt.

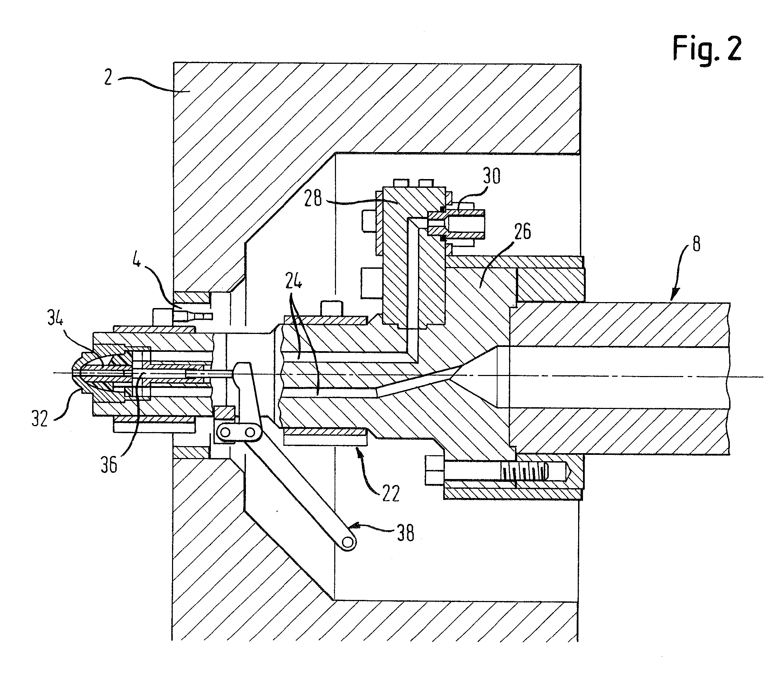

In Fig. 2 ist in einer schematischen Detail-Schnittzeichnung ein erfindungsgemäßes Düsenmittel 22 nach Art eines Trennkopfes dargestellt. Durch die Düsenöffnung 4 einer Formaufspannplatte 2 greifen Düsenmittel 22, die über Kanäle 24 eine Strömungsverbindung von einer Andockstation 26 für eine erste Plastifizier- und Einspritzeinheit und einer Andockstation 28 für eine zweite Plastifizier- und Einspritzeinheit zu einem Düsenkopf 32 herstellen, an dem die Schmelze von den beiden Einspritzeinheiten 8, 14 durch eine einzige Austrittsöffnung in ein nicht dargestelltes Formwerkzeug einspritzbar ist. Das Einspritzen kann hierbei parallel oder nacheinander erfolgen. Die nicht dargestellte zweite Einspritzeinheit kann über eine mit ihr verbundene Andockdüse 30 in eine Kalotte in der zweiten Andockstation 28 einfahren, und durch Aufbringen von Druck an der zweiten Plastifizier- und Einspritzeinheit kann gewährleistet werden, dass eine dichte Verbindung gegeben ist. In einem Düseneinsatz 34 der Düsenmittel 22 ist eine Nadel 36 eines Nadelverschlussmechanismus 38 gelagert. Der genauere Aufbau ist aus dem Stand der Technik bekannt. Die von den beiden Plastifizier- und Einspritzeinheiten jeweils aufgebrachten Anpresskräfte wirken hierbei im wesentlichen parallel zu einer Einspritzrichtung, wodurch eine gute Dichtwirkung zwischen dem Düsenmittel 22 und dem Formwerkzeug sowie geringe auf das Düsenmittel 22 wirkende Biegemomente gewährleistbar sind. Das Düsenmittel 22 ist in dieser Ausgestaltung zumindest teilweise in einer Ausnehmung der Formaufspannplatte 2 aufgenommen, wodurch sich die Länge der Spritzgießmaschine 1 weiter reduzieren lässt.

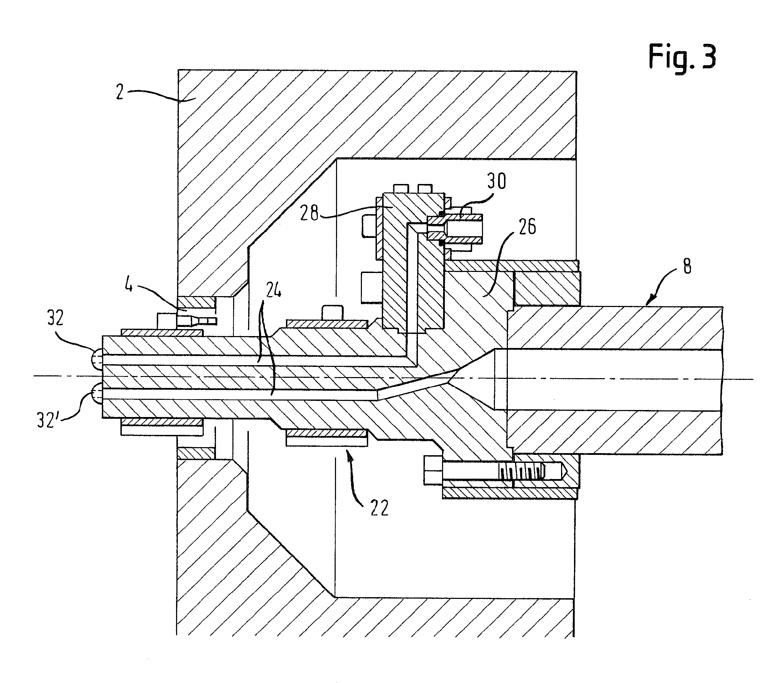

Alternativ kann eine Doppeldüse gemäß Fig. 3 zum Einsatz kommen. Entsprechende Elemente zu den Düsenmitteln gemäß Fig. 2 behalten dieselben Bezugsziffern. Hier sind die Düsenmittel 22 derart ausgestaltet, dass wieder an einer ersten Andockstation 26 die erste Plastifizier- und Einspritzeinheit 8 andockbar ist, im vorliegenden Fall verbindbar durch Schraubmittel, während über eine zweite Andockstation 28 eine nicht näher dargestellte zweite Plastifizier- und Einspritzeinheit des Nachrüstmoduls 12 über eine Andockdüse 30 andockbar ist. Von den beiden Andockstationen wird über Kanäle 24 die Schmelze von den jeweiligen Plastifizier- und Einspritzeinheiten 8, 14 durch eine Düsenöffnung 4 in der festen Formaufspannplatte 2 hindurch an Düsenköpfe 32, 32' geleitet, die in dichtende Verbindungen mit Anschlusskanälen in einem nicht dargestellten Formwerkzeug, das auf der Formaufspannplatte 2 halterbar ausgebildet ist, bringbar sind. Hierbei sind die Düsenmittel 22 derart ausgestaltet, dass zwar eine fortwährende Trennung der beiden Schmelzeströme gegeben ist, jedoch gewährleistet ist, dass eine Durchführung durch eine standardmäßig vorgesehene Düsenöffnung 4 der Formaufspannplatte 4 einer Spritzgießmaschine 1 gewährleistet ist. Auch gemäß dieser Ausführungsform sind die Düsenmittel 22 zumindest teilweise in einer Aussparung der Formaufspannplatte 2 aufgenommen, um eine kompakte Bauweise der Spritzgießmaschine 1 zu ermöglichen.

Die erfindungsgemäße Spritzgießmaschine mit nachgerüsteter zweiter Plastifizier- und Einspritzeinheit sowie das erfindungsgemäße Nachrüstmodul mit einer zweiten Plastifizier- und Einspritzeinheit zum Nachrüsten derselben an einer Spritzgießmaschine sind insbesondere in der in Fig. 1 gezeigten Version sehr kompakt und platzsparend an einer Standardspritzgießmaschine anbringbar und erlauben es, diese ohne Umbauarbeiten an der Spritzgießmaschine mit einem zweiten Plastifizier- und Einspritzmodul nachzurüsten. Gegenüber den bislang bekannten Nachrüstmodulen in L- und V-Stellung wird dadurch eine starke Platzeinsparung und eine flexible und schnelle Umrüstzeit ermöglicht.

### Bezugszeichenliste

- 1: Spritzgießmaschine
- 2: feste Werkzeugaufspannplatte
- 4: Düsenöffnung
- 6: Maschinenbett
- 8: erste Plastifizier- und Einspritzeinheit
- 10: Linearführung
- 12: Nachrüstmodul
- 14: zweite Plastifizier- und Einspritzeinheit
- 16: Träger
- 18: Linearführung
- 20: Abstützbalken
- 22: Düsenmittel
- 24: Schmelzekanäle
- 26: Andockstation für erste Plastifizier- und Einspritzeinheit
- 28: Andockstation für zweite Plastifizier- und Einspritzeinheit
- 30: Andockdüse
- 32,32': Düsenkopf
- 34: Düseneinsatz
- 36: Nadel
- 38: Nadelverschlussmechanismus

## Patentansprüche

1. Spritzgießmaschine mit einer ersten Plastifizier- und Einspritzeinheit (8) und einer zweiten Plastifizier- und Einspritzeinheit (14), wobei beide Plastifizier- und Einspritzeinheiten auf einer Seite einer Formaufspannplatte (2) der Spritzgießmaschine angeordnet oder anordenbar sind,
**dadurch gekennzeichnet,**
**dass** Mittel vorgesehen sind, um die zweite solche Einheit (14) unabhängig von der ersten (8) an der Spritzgießmaschine (1) derart zu haltern, dass sie im wesentlichen einen Winkel von kleiner als 90°, insbesondere aber von kleiner als 45° mit der ersten Plastifizier- und Einspritzeinheit einschließt,
**dass** die zweite Einheit (14) an den Mitteln zum Haltern relativ zu der Formaufspannplatte (2) der Spritzgießmaschine (1) fest oder verfahrbar gelagert ist, und
**dass** Düsenmittel (22) zum Führen von Schmelze von den beiden Plastifizier- und Einspritzeinheiten (8, 14) durch eine einzige Düsenöffnung (4) der Formaufspannplatte (2) vorgesehen sind, wobei diese Düsenmittel (4) derart ausgestaltet sind, dass beide Einheiten (8, 14) an sie andockbar sind.

2. Spritzgießmaschine nach Anspruch 1,
**dadurch gekennzeichnet, dass**
als Düsenmittel (22) ein Trennkopf zum Erzeugen einer Haut- und einer Kernkomponente in einem Formwerkzeug der Spritzgießmaschine (1) vorgesehen ist.

3. Spritzgießmaschine nach Anspruch 1,
**dadurch gekennzeichnet, dass**
als Düsenmittel (22) eine Doppeldüse vorgesehen ist, mittels derer eine separate Strömungsverbindung zwischen den jeweiligen Plastifizier- und Einspritzeinheiten (8, 14) und einer Formvorrichtung der Spritzgießmaschine (1) herstellbar ist.

4. Spritzgießmaschine nach einem der Ansprüche 1-3,
**dadurch gekennzeichnet, dass**
die Mittel zum Haltern der zweiten Plastifizier- und Einspritzeinheit einen Träger (16) mit integrierter Linearführung (18) umfassen.

5. Spritzgießmaschine nach Anspruch 4,
**dadurch gekennzeichnet, dass**
der Träger (16) an einer Formaufspannplatte (2) der Spritzgießmaschine (1) befestigbar ist.

6. Spritzgießmaschine nach Anspruch 4 oder 5,
**dadurch gekennzeichnet, dass**
der Träger (16) auf einem Maschinenbett (6) der Spritzgießmaschine (1) abstützbar ist.

7. Spritzgießmaschine nach einem der Ansprüche 1 - 6,
**dadurch gekennzeichnet, dass**
die zweite Plastifizier- und Einspritzeinheit (14) im wesentlichen oberhalb der ersten solchen Einheit (8) anbringbar ist.

8. Nachrüstmodul mit einer Plastifizier- und Einspritzeinheit (14) zum Nachrüsten derselben an einer Spritzgießmaschine (1) mit mindestens einer ersten Plastifizier- und Einspritzeinheit (8),
**dadurch gekennzeichnet,**
**dass** das Nachrüstmodul (12) Mittel zum Haltern der Plastifizier- und Einspritzeinheit (14) unabhängig von der ersten Plastifizier- und Einspritzeinheit (8) an der Spritzgießmaschine (1) aufweist, wobei die Plastifizier- und Einspritzeinheit (14) derart an den Mitteln zum Haltern angebracht oder anbringbar ist, dass die Längsachsen der Plastifizier- und Einspritzeinheit (14) und der ersten Plastifizier- und Einspritzeinheit (8) einen Winkel kleiner 90°, insbesondere kleiner 45°, miteinander einschließen,
**dass** die zweite Einheit (14) an den Mitteln zum Haltern relativ zu einer Formaufspannplatte (2) der Spritzgießmaschine (1) fest oder verfahrbar gelagert ist, und
**dass** Düsenmittel (22) zum Führen von Schmelze von den beiden Plastifizier- und Einspritzeinheiten (8, 14) durch eine einzige Düsenöffnung (4) einer Formaufspannplatte (2) vorgesehen sind, wobei diese Düsenmittel (22) derart ausgestaltet sind, dass beide Plastifizier- und Einspritzeinheiten (8, 14) an sie andockbar sind.

9. Nachrüstmodul nach Anspruch 8,
**dadurch gekennzeichnet, dass**
die Mittel zum Haltern der Plastifizier- und Einspritzeinheit einen Träger (16) mit integrierter Linearführung (18) umfassen, wobei die Plastifizier- und Einspritzeinheit (14) an der Linearführung (18) verfahrbar gelagert ist.

10. Nachrüstmodul nach Anspruch 9,
**dadurch gekennzeichnet, dass**
der Träger (16) an einer Formaufspannplatte (2) der Spritzgießmaschine (2) befestigbar ausgebildet ist.

11. Nachrüstmodul nach Anspruch 9 oder 10,
**dadurch gekennzeichnet, dass**
der Träger (16) an einem Maschinenbett (6) der Spritzgießmaschine (1) abstützbar ausgebildet ist.

12. Nachrüstmodul nach einem der Ansprüche 8-11,
**dadurch gekennzeichnet, dass**
die Düsenmittel (22) derart ausgestaltet sind, dass mit ihnen Schmelze der beiden Einheiten (8, 14) entweder durch einen gemeinsamen oder zwei getrennte Düsenköpfe (32, 32') durch die Düsenöffnung (4) führbar ist.

13. Nachrüstmodul nach einem der Ansprüche 8―12,
**dadurch gekennzeichnet, dass**
die Plastifizier- und Einspritzeinheit (14) an den Mitteln zum Haltern im wesentlichen oberhalb der ersten Plastifizier- und Einspritzeinheit (8) halterbar ist.
